# EUROPÄISCHE PATENTANMELDUNG

(11) **EP 1 398 206 A1**
(43) Veröffentlichungstag der Anmeldung: **17.03.2004**
(21) Anmeldenummer: 03019037.5
(22) Anmeldetag: 22.08.2003
(51) Int. Cl.: B60N 2/48, B62D 21/18

(54) **Kopfstütze an Kart-Rennfahrzeugen**

(30) Priorität: 05.09.2002 DE 10242135
(71) Anmelder: KMH Automotive GmbH, 56588 Waldbreitbach (DE)
(72) Erfinder: Noack, Gerd, 50170 Kerpen (DE)
(74) Vertreter: Schindler, Gunter

(57) **Zusammenfassung**

Die Erfindung betrifft eine Kopfstütze an Kart-Rennfahrzeugen. Solche Kopfstützen müssen dem Kopf Schutz gegen impulsartige Bewegungen entgegen der Fahrtrichtung und seitlich dazu bieten und dürfen gleichzeitig die Eigenschaften und den Luftwiderstand des Kart nicht negativ beeinflussen.

Sie ist dadurch gekennzeichnet,
- dass ein Stützbereich 1, ein Verlängerungsbereich 2 und ein Befestigungsbereich 3 angeordnet sind,
- dass der Stützbereich 1, der Verlängerungsbereich 2 und der Befestigungsbereich 3 in einem Herstellungsschritt als gesamtes Teil aus einem bekannten Faserverbundwerkstoff bestehen,
- dass der Stützbereich 1 nichtflächig durch beidseitig angeordnete Umgriffe 4 ausgebildet ist,
- dass der Verlängerungsbereich 2 zweischenklig ausgebildet in den ebenfalls zweischenklig ausgebildet Befestigungsbereich 3 fließend übergeht,
- dass der Stützbereich 1 einschließlich der beidseitigen Umgriffe 4 und der Verlängerungsbereich 2 in einer aerodynamisch günstigen Querschnittsform ausgebildet sind,
- dass der Befestigungsbereich 3 zur Kraftüberleitung in einen Sitz 6 verstärkt ausgebildet ist und
- dass über den Befestigungsbereich 3 mittels mehrerer untereinander höhenversetzt angeordneter bekannter Maschinenelemente 5 die Kopfstütze lösbar aber schwingungsfest mit dem vorhandenen Sitz 6) eines Kart-Rennfahrzeuges als Nachrüstung unter Anpassbarkeit für jeden Fahrer in der Höhe und Neigung gemäß Körpergröße und Helmform dadurch befestigt ist, dass zur Höhenanpassung entweder bei Erstanbringung der Befestigungsbereich 3 aus seiner ursprünglich hergestellten Überlänge entsprechend auf die benötigte Länge eingekürzt zur Anwendung kommt oder bei Wiederanbringung die höhenversetzt angeordneten bekannten Maschinenelemente 5 in einer angepassten Höhe durch mehrere untereinander höhenversetzt angeordnete Öffnungen 7) im vorhandenen Sitz 6 des Kart-Rennfahrzeuges zur Anwendung kommen und dabei die individuell durch den Fahrer benötigte Neigung durch die Anbringung bekannter Distanzelemente 8 an jeweils höhengleichen Befestigungspunkten zwischen Kopfstütze und Sitz 6 erzeugt wird.

## Beschreibung

Die Neuerung bezieht sich auf eine Kopfstütze an Kart-Rennfahrzeugen. Solche Kopfstützen haben die gleiche Grundfunktion, wie übliche Kopfstützen im Fahrzeugbau, nämlich den Schutz des Kopfes bei impulsartigen Bewegungen entgegen der Fahrtrichtung. Aber durch ihre Verwendung in den speziellen Kart-Rennfahrzeugen müssen sie diesen Rennfahrzeugen spezifisch angepasst sein und auch den Schutz des Kopfes bei seitlichen impulsartigen Bewegungen realisieren.

Kopfstützen an sich sind seit ihrer Verwendung in ihrer ehemaligen Grundfunktion, nämlich Stützen des Kopfes in einer Sitz- und/oder Liegeposition über einen längeren Zeitraum, in vielfältigen Ausführungen und Formen höhenverstellbar und mit ihrem Polsterteil verstellbar bekannt. Ebenso sind im PKW Kopfstützen höhenverstellbar und mit ihrem Polsterteil verstellbar bekannt. Hierbei sind aber der Bequemlichkeit des Nutzers geschuldet so stark gepolsterte Ausführungen auf einem Grundgestell üblich, dass darin Rohrkonstruktionen für die Höhenverstellbarkeit exzellent angebracht werden können. Eine geringe Neigungsverstellung wird durch die Verstellung der Polsterung im Auflagebereich des Kopfes erreicht. Diese Lösungen können nicht 1:1 übernommen werden, da die spezifischen Forderungen für Kopfstützen an Kart-Rennfahrzeugen sind:
1. Schutz bei impulsartigen Kopfbewegung gegen die Fahrtrichtung und auch seitlich dazu,
2. Einfache Anpassbarkeit für jeden Benutzer in der Höhe und Neigung gemäß Körpergröße und Helmform,
3. geringer aerodynamischer Widerstand und
4. keine wesentliche Beeinflussung des Fahrzeugschwerpunktes und damit der Fahreigenschaften.

Dabei sind die Anforderungen an einen wirtschaftlichen Betrieb eines Kart-Renn-Unternehmens selbstverständlich auch noch zu beachten.
In der Patentliteratur finden sich sehr viele Lösungsvorschläge für dieses Problem, so dass schon von einem abgegrasten technischen Gebiet ausgegangen werden muss. Andererseits blieben in der Praxis alle diese Vorschläge lediglich papierner Stand der Technik, da auf den Kart-Rennbahnen keine solche Kopfstützen in Benutzung sind.

Stellvertretend für die vorgeschlagenen Lösungen sollen als Beispiele die Lösungen nach WO 99/52762, DE 201 16 262 U1 und DE 297 10 870 U1 angeführt werden. Nachteilig daran ist, dass ein kompletter Sitz mit integrierter Kopfstütze vorgeschlagen wird, der nur unsere erste der obigen Forderungen erfüllen kann. Diese erste Forderung wird aber nur von DE 297 10 870 U1 insgesamt erfüllt, da die beiden vorher genannten Lösungen nicht einmal einen Schutz gegen seitliche impulsartige Bewegungen bieten können. In der DE 297 10 870 U1 wird im Text auch erwähnt, dass die Kopfstütze in einer an der Rückenlehne angebrachten Halterung eingesetzt werden kann.
Nachteilig an den vorgeschlagenen Lösungen bleibt also die Nichterfüllung der obigen Forderungen gemäß 2. bis 4. Ebenso nachteilig bleibt weiterhin, dass nur komplette neue Sitze und kein nachträglicher Anbau an vorhandene Sitze möglich ist. Dies widerspricht den Anforderungen an einen wirtschaftlichen Betrieb eines Kart-Renn-Unternehmens, die solche Investitionen für Lösungen nur eines Teils der anstehenden Probleme nicht vertretbar erscheinen lassen.

Der im Anspruch 1 angegebenen Erfindung liegt damit das Problem zugrunde, eine Kopfstütze an Kart-Rennfahrzeuge bereitzustellen, die Schutz bei impulsartigen Kopfbewegung gegen die Fahrtrichtung und auch seitlich dazu bieten kann, eine einfache Anpassbarkeit für jeden Benutzer in der Höhe und Neigung gemäß Körpergröße und Helmform erlaubt, geringen aerodynamischer Widerstand bietet, keine wesentliche Beeinflussung des Fahrzeugschwerpunktes und damit der Fahreigenschaften erzeugt und unter wirtschaftlichen Aspekten des Kart-Renn-Unternehmens realisierbar ist.
Dieses Problem wird durch die im Patentanspruch genannten Merkmale gelöst.

Die mit der Erfindung erzielten Vorteile bestehen darin, dass durch die individuelle Einstellbarkeit auf jeden Fahrer guter Schutz bei impulsartigen Kopfbewegungen gegen die Fahrtrichtung und auch seitlich dazu erreicht wird, dass eine mit einfachen Mitteln und jederzeit realisierbare Anpassbarkeit für jeden Benutzer in der Höhe und Neigung gemäß Körpergröße und Helmform bei Ersteinsatz oder auch bei Nutzung durch eine zweite oder dritte Person möglich ist, dass durch die nichtflächige Gestaltung nur ein geringer aerodynamischer Widerstand besteht und dass durch die verwendeten Materialien mit geringem Eigengewicht nur eine unwesentliche Beeinflussung des Fahrzeugschwerpunktes und damit der Fahreigenschaften hervorgerufen wird. Durch die nachträgliche Anbaubarkeit an vorhandene Sitze wird auch den wirtschaftlichen Forderungen eines Kart-Renn-Unternehmens Rechnung getragen.

Die Erfindung soll nachfolgend an einem bevorzugten Ausführungsbeispiel näher erläutert werden. Die Zeichnungen zeigen:
- Figur 1:: Kopfstütze in Rippenkonstruktion am Sitz angebaut, Seitenansicht
- Figur 2:: Kopfstütze in Rippenkonstruktion am Sitz angebaut, Perspektive
- Figur 3:: Kopfstütze - Variante in Rippenkonstruktion, Vorderansicht
- Figur 4:: Kopfstütze- Variante in Rippenkonstruktion, Draufsicht
- Figur 5:: Kopfstütze in Rahmenkonstruktion am Sitz angebaut, Seitenansicht
- Figur 6:: Kopfstütze in Rahmenkonstruktion am Sitz angebaut, Perspektive
- Figur 7:: Kopfstütze - Variante in Rahmenkonstruktion, Vorderansicht
- Figur 8:: Kopfstütze - Variante in Rahmenkonstruktion, Draufsicht
- Figur 9:: Befestigungsdetail

Dabei werden folgende Bezugszeichen benutzt:
1 Stützbereich,
2 Verlängerungsbereich,
3 Befestigungsbereich,
4 Umgriff,
5 bekanntes Maschinenelement,
6 Sitz,
7 Öffnung
8 bekanntes Distanzelement.

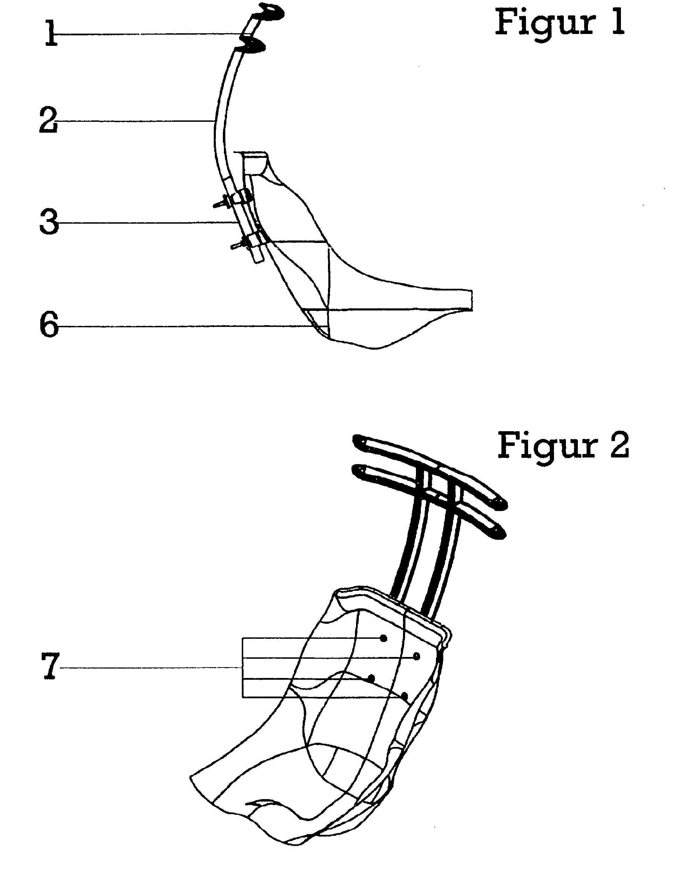

Die erfindungsgemäße Kopfstütze gemäß Figur 1, 2, 5 und 6 gliedert sich in drei Funktionsbereiche. Ein Stützbereich 1 geht in einen Verlängerungsbereich 2 und dieser in einen Befestigungsbereich 3 fließend über. Die gesamte Kopfstütze wird als ein Teil aus bekannten Faserverbundwerkstoffen in aerodynamisch günstiger Querschnittsform hergestellt, wobei diese Herstellung, je nach Bedarf, sowohl in manueller Fertigung (Handauflegeverfahren) aber auch weitgehend mechanisiert erfolgen kann. Diese Faserverbundwerkstoffe beeinflussen durch ihr geringes Gewicht den Fahrzeugschwerpunkt und damit das gesamte Fahrverhalten nur unbedeutend.

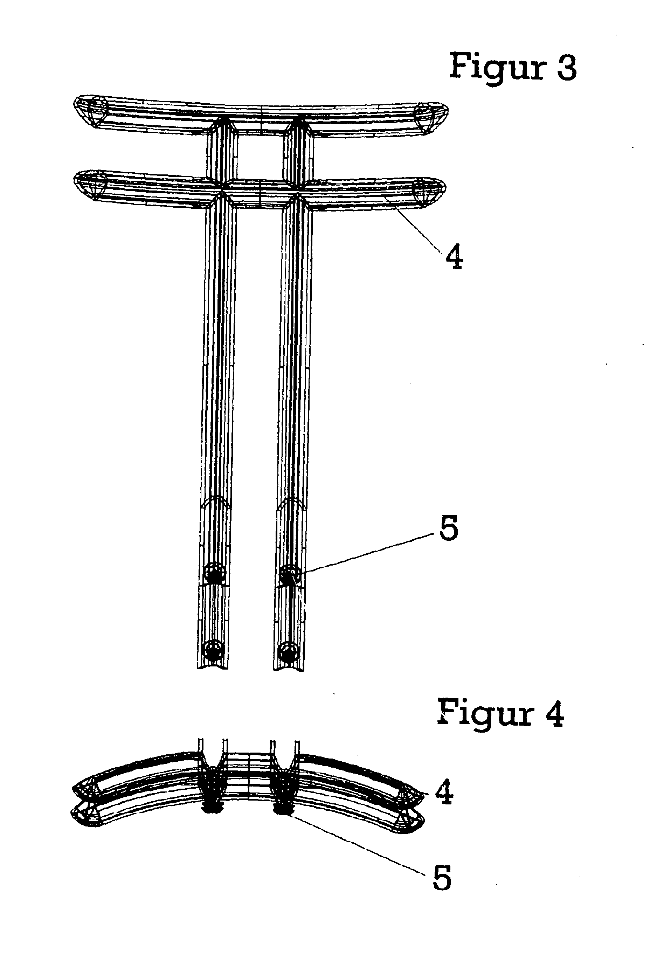

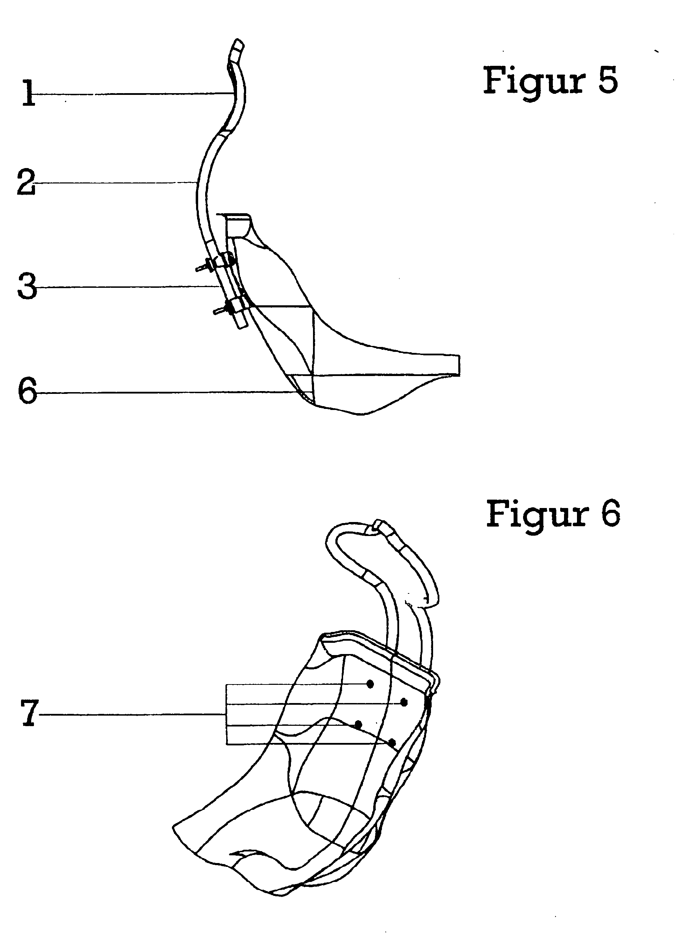

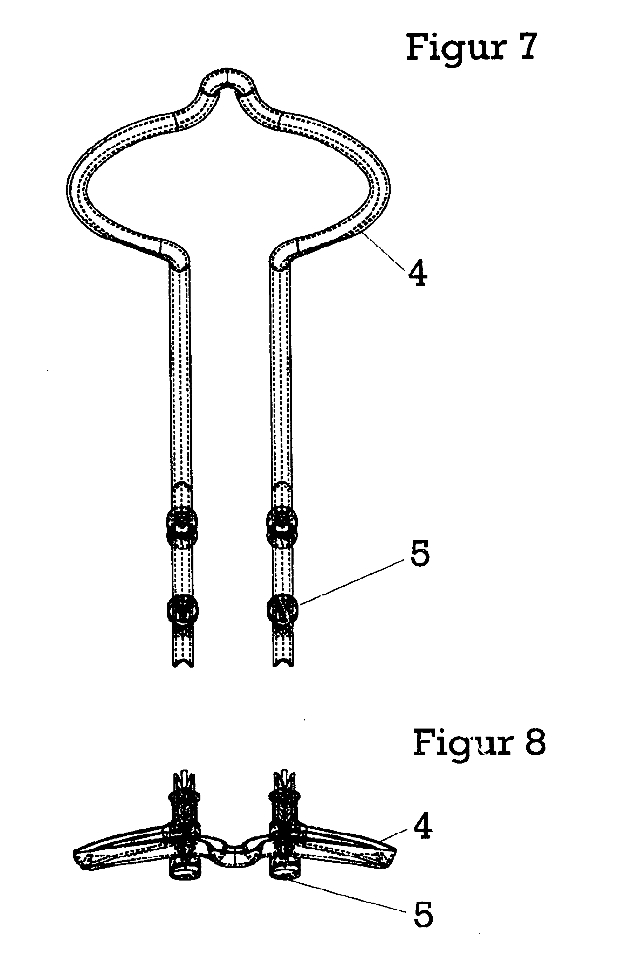

Der Stützbereich 1 ist dem Luftwiderstand geschuldet nicht flächig ausgebildet. Er besteht vielmehr aus wenigsten beidseitig angeordneten Umgriffen 4, um seine Stützfunktion bei gleichzeitig geringstem aerodynamischen Widerstand zu erfüllen. Diese Umgriffe 4 können in verschiedensten Gestaltungen ausgebildet sein, wie z.B. aus einer Rippenkonstruktion gemäß Figur 3 und 4 aus beidseitig je mindestens zwei fingerartigen an ihren äußeren nach vorn in Fahrtrichtung gekrümmten frei oder miteinander verbundenen Enden oder einer Rahmenkonstruktion gemäß Figur 7 und 8 aus beidseitig außen nach vorn in Fahrtrichtung gekrümmten und oben oder unten oder oben und unten verbundenen randbildenden Elementen. Die Variante mit unterer Verbindung der randbildenden Elemente ist zeichnerisch nicht dargestellt.

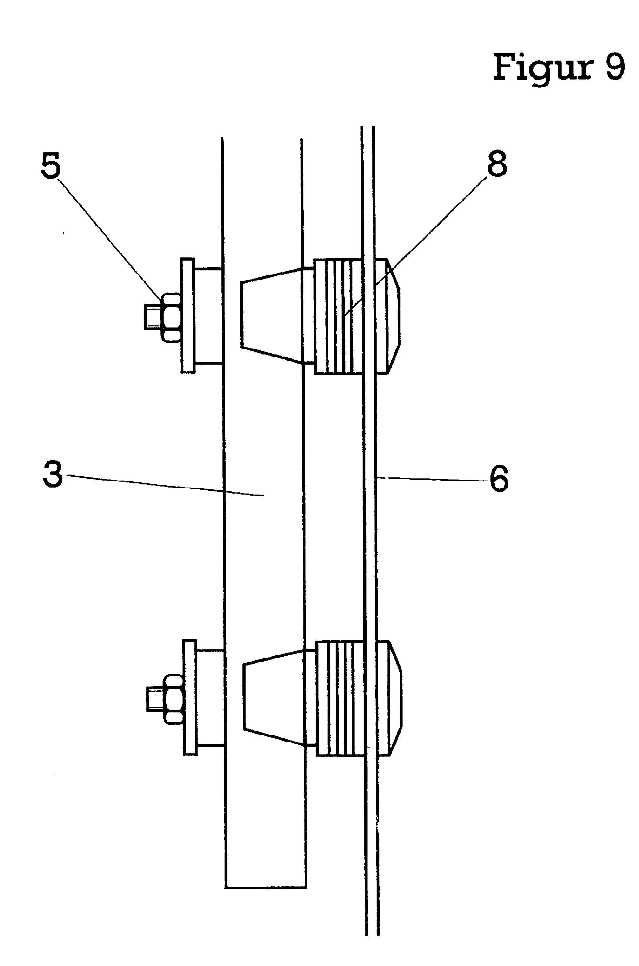

Der Verlängerungsbereich 2 ist mindestens zweischenklig ausgebildet, damit im zur Kraftüberleitung verstärkt ausgebildeten Befestigungsbereich 3 diese weitergeführten Schenkel nunmehr über wenigstens vier Öffnungen 7, je zwei in gleicher Höhe, am vorhandenen Sitz 6 des Kart-Rennfahrzeuges gemäß Figur 7 mit bekannten Maschinenelementen 5 angebracht werden können. Dabei erfolgt nunmehr die individuelle Einstellung auf den Fahrer. Die Höhe wird bei einem Ersteinsatz der erfindungsgemäßen Kopfstütze durch Einkürzen der beiden Schenkel im Befestigungsbereich 3 auf den Fahrer eingestellt. Dazu werden im Sitz 6 die vier Öffnungen 7 im Schenkelabstand des Befestigungsbereichs 3 und in einem definierten Höhenabstand und in gleichem Abstand Durchgangslöcher in beiden Schenkeln des Befestigungsbereichs 3 gebohrt. Die Neigung wird durch Anbringung bekannter Distanzelemente 8, z.B. Unterlegscheiben oder Distanzhülsen, an jeweils höhengleichen Befestigungspunkten zwischen Kopfstütze und Sitz 6 bevorzugt auf einen Abstand von 5 cm zwischen Helm und Kopfstütze bei normaler Sitzposition eingestellt. Dabei setzen diese bekannten Distanzelemente 8 an den beiden oberen Befestigungspunkten die Kopfstütze in Fahrtrichtung zurück und umgekehrt an den beiden unteren Befestigungspunkten die Kopfstütze in Fahrtrichtung nach vorn. In Figur 9 ist die beschriebene Befestigung und Neigungseinstellung im Datail dargestellt.

Soll ein Sitz mit erfindungsgemäßer Kopfstütze auf einen neuen Fahrer eingestellte werden, so gibt es dazu zwei Möglichkeiten. Selbstverständlich kann eine neue Kopfstütze, wie oben beschrieben, für diesen Fahrer angepasst und montiert werden. Aber auch die Wiederverwendung der schon eingestellten Kopfstütze ist möglich. Dabei wird die Höhe durch Anbringung weiterer Öffnungen 7 im Sitz 6 auf den neuen Fahrer eingestellt, so dass statt bisher vier Öffnungen 7 nunmehr z.B. sechs Öffnungen 7 in drei verschiedenen Höhenpositionen im Sitz 6 vorhanden sind. Durch Anbringung der entsprechenden bekannten Distanzelemente 8 und Befestigung der Kopfstütze an den vier für die Höhe des Neuen Fahrers benötigten Öffnungen 7 ist die individuelle Einstellung auf den neuen Fahrer realisiert.

Sollte bei der Befestigung der Kopfstütze am Sitz 6 das Sitzmaterial ein punktartige Befestigung nicht erlauben, so sind ohne erfinderische Leistung mittels bekannter Verstärkungen auf der vom Befestigungsbereich 3 abgewandten Sitzseite, wie großflächige Unterlagen, die einzuleitenden Kräfte zu verteilen.

## Patentansprüche

1. Kopfstütze an Kart-Rennfahrzeugen, **dadurch gekennzeichnet,**
- **dass** ein Stützbereich (1), ein Verlängerungsbereich (2) und ein Befestigungsbereich (3) angeordnet sind,
- **dass** der Stützbereich (1), der Verlängerungsbereich (2) und der Befestigungsbereich (3) in einem Herstellungsschritt als gesamtes Teil aus einem bekannten Faserverbundwerkstoff bestehen,
- **dass** der Stützbereich (1) nichtflächig durch beidseitig angeordnete Umgriffe (4) ausgebildet ist,
- **dass** der Verlängerungsbereich (2) zweischenklig ausgebildet in den ebenfalls zweischenklig ausgebildet Befestigungsbereich (3) fließend übergeht,
- **dass** der Stützbereich (1) einschließlich der beidseitigen Umgriffe (4) und der Verlängerungsbereich (2) in einer aerodynamisch günstigen Querschnittsform ausgebildet sind,
- **dass** der Befestigungsbereich (3) zur Kraftüberleitung in einen Sitz (6) verstärkt ausgebildet ist und
- **dass** über den Befestigungsbereich (3) mittels mehrerer untereinander höhenversetzt angeordneter bekannter Maschinenelemente (5) die Kopfstütze lösbar aber schwingungsfest mit dem vorhandenen Sitz (6) eines Kart-Rennfahrzeuges als Nachrüstung unter Anpassbarkeit für jeden Fahrer in der Höhe und Neigung gemäß Körpergröße und Helmform dadurch befestigt ist, dass zur Höhenanpassung entweder bei Erstanbringung der Befestigungsbereich (3) aus seiner ursprünglich hergestellten Überlänge entsprechend auf die benötigte Länge eingekürzt zur Anwendung kommt oder bei Wiederanbringung die höhenversetzt angeordneten bekannten Maschinenelemente (5) in einer angepassten Höhe durch mehrere untereinander höhenversetzt angeordnete Öffnungen (7) im vorhandenen Sitz (6) des Kart-Rennfahrzeuges zur Anwendung kommen und dabei die individuell durch den Fahrer benötigte Neigung durch die Anbringung bekannter Distanzelemente (8) an jeweils höhengleichen Befestigungspunkten zwischen Kopfstütze und Sitz (6) erzeugt wird.
